# EUROPEAN PATENT APPLICATION

(11) **EP 1 211 899 A1**
(43) Date of publication of application: **05.06.2002**
(21) Application number: 00610122.4
(22) Date of filing: 29.11.2000
(51) Int. Cl.: H04N 7/14

(54) **A portable communications device**

(71) Applicant: TELEFONAKTIEBOLAGET L M ERICSSON (publ), 126 25 Stockholm (SE)
(72) Inventor: Wendelrup, Heino, 214 34 Malmö (SE)
(74) Representative: Boesen, Johnny Peder

(57) **Abstract**

A digital portable communications device (1) for communication via a communications network (28) has circuitry for exchanging video signals between the device and an external video apparatus (25; 31). The circuitry for exchanging video signals is arranged to exchange the video signals in the form of analog video signals. When analog video signals are used, the exchange of video signals with external video apparatuses is not limited to apparatuses adapted to a specific protocol for the exchange of digital video signals. Thus, it is not needed to have specific software drivers for different digital protocols in the communications device in order to communicate with a camera or a display unit. Any digital or analog camera, video recorder or video display unit can be used as an accessory to the communications device.

## Description

### Technical Field of the Invention

The invention relates to a digital portable communications device for communication via a communications network, said device further having circuitry for exchanging video signals between the device and an external video apparatus. The invention further relates to a method of exchanging video signals between an external video apparatus and such a digital portable communications device.

### Description of Related Art

Digital portable communications devices, such as mobile telephones, have until now mostly been used for voice communication, but the use of such devices for exchange of other types of data is now increasing. As an example, many mobile telephones are used for sending and receiving SMS messages, and WAP telephones download information from the Internet. This means that also digitally stored images can be transmitted. An example of this is disclosed in US 5 893 037, in which a digital camera can be connected to a cellular telephone. In the camera, the signals from an electronic image sensor are converted into digital image signals and stored in a memory unit. The stored digital signals can be viewed on a display or supplied to the cellular telephone for transmission to a remote location. The cellular telephone establishes a communication link with the remote location, e.g. by using conventional modem communications protocols, and the digital image signal stored in the memory of the camera is downloaded to the cellular phone for transmission over the established communications link.

New generations of the communications devices will allow considerable higher data rates to be exchanged between such communications devices and the networks to which they are connected. As an example, UMTS telephones promise data rates up to 2 Mbit/s. With these higher data rates it will also be possible to transmit video signals to and from communications devices of this type. These video signals will be transmitted in a digital format, and they may further be exchanged between the communications device and external video apparatuses, such as digital cameras or digital display units. JP 3-109891 shows a portable radio telephone set having integrated video display means and image pickup means with which digital video signals can be exchanged.

However, the exchange of digital video signals between the communications device and the external video apparatuses is associated with some disadvantages. One problem is that there are several different protocols or standards for the exchange of such digital signals. If one of these protocols is chosen to be implemented in the communications device, it will only be able to exchange signals with external video apparatuses adapted to the same protocol, while video apparatuses utilizing other protocols cannot be used. Thus, if the communications device is to be able to exchange signals according to several of these protocols, each protocol must be implemented in the device, i.e. there must be a software driver for each protocol. Although this is possible, it will occupy additional amounts of memory in the device, and since memory is a critical parameter in portable communications devices, this solution will normally not be acceptable. Therefore a user having a certain type of portable communications device is restricted to a limited range of external video apparatuses, if they are to be used together with the communications device.

Further, there is still much video equipment, such as standard TV receivers, computer monitors or standard video cameras, which is not adapted to receive or transmit video signals in any of the digital formats, and many users would appreciate it if the communications device could also be used together with such equipment.

Therefore, it is an object of the invention to provide a digital portable communications device of the above-mentioned type which can exchange video signals with external video apparatuses without being limited to apparatuses adapted to a specific protocol for the exchange of digital video signals.

### Summary

According to the invention the object is achieved in that the circuitry for exchanging video signals is arranged to exchange video signals in the form of analog video signals.

When analog video signals are used, it is no longer needed to have specific software drivers for digital protocols in the communications device in order to communicate with a camera or a display unit. Any digital or analog camera, video recorder or video display unit can be used as an accessory to the communications device. As an example, it is possible to connect the communications device directly to a normal TV or a normal video camera.

In one embodiment of the invention the circuitry for exchanging video signals comprises digital-to-analog conversion means arranged to provide an analog video output signal for transmission to said external video apparatus. This allows any normal video display unit to display the video signals that are output from the communications device. The circuitry for exchanging video signals can also comprise means for receiving an analog video input signal from said external video apparatus, and analog-to-digital conversion means for converting the received analog video input signal into a digital video signal, which means that any video camera or video recorder can deliver the video input signal to the communications device.

The device may further comprise memory for storage of digital video signals, such that video signals from e.g. a video camera can be stored in the device, or video signals stored in the device can be displayed on a TV receiver.

In an expedient embodiment the circuitry for exchanging video signals is arranged to exchange the analog video signals in a standard television signal format, such as NTSC or PAL, which means that the communications device can be connected directly to e.g. a standard TV receiver or a camcorder. Alternatively, the circuitry for exchanging video signals can be arranged to exchange the analog video signals in an RGB format, which allows easy connection to a video camera and/or most computer monitors.

In a further embodiment the circuitry for exchanging video signals is arranged to exchange the analog video signals via an interface connector on the device. This connector can be a standard system connector which is also used for the connection of the communications device to other external accessories.

In an expedient embodiment the device is a mobile telephone. In another embodiment it is a device having a Bluetooth interface.

As mentioned, the invention also relates to a method of exchanging video signals between an external video apparatus and a digital portable communications device for communication via a communications network. When the video signals are exchanged in the form of analog video signals, it is no longer needed to have specific software drivers for digital protocols in the communications device in order to communicate with a camera or a display unit. Any digital or analog camera, video recorder or video display unit can be used as an accessory to the communications device. As an example, it is possible to connect the communications device directly to a normal TV or a normal video camera.

In an embodiment digital video signals are converted into analog video signals in the digital portable communications device and then transmitted as analog video output signals from the portable communications device to the external video apparatus. This allows any normal video display unit to display the video signals that are output from the communications device.

The digital video signals to be converted may be read from a memory in the portable communications device, and they may also be presented on a display on the portable communications device, which allows the same picture or video to be presented simultaneously on the device as well as on an external video display unit. As an alternative to reading the digital video signals from a memory, they may be received by the portable communications device via said communications network.

Analog video signals may also be transmitted from the external video apparatus to the portable communications device in which the analog video signals are converted into digital video signals, which means that any video camera or video recorder can deliver the video input signal to the communications device.

The digital video signals may be stored in a memory in the portable communications device, or they may be transmitted by the portable communications device to said communications network.

In an expedient embodiment the analog video signals are exchanged in a standard television signal format, such as NTSC or PAL, which means that the communications device can be connected directly to e.g. a standard TV receiver or a camcorder. Alternatively, the analog video signals may be exchanged in an RGB format, which allows for easy connection to a video camera and/or most computer monitors.

In a further embodiment the analog video signals are exchanged via an interface connector on the digital portable communications device. This connector can be a standard system connector which is also used for the connection of the communications device to other external accessories.

In an expedient embodiment the digital portable communications device is a mobile telephone.

### Brief Description of the Drawings

The invention will now be described more fully below with reference to the drawings, in which
figure 1 shows a first embodiment of a communications device according to the invention,
figure 2 shows a second embodiment of a communications device according to the invention,
figure 3 shows an example of the use of an analog video output signal from the device of figure 1,
figure 4 shows an example of the use of an analog video input signal from the device of figure 1, and
figure 5 shows an example of the use of analog video input and output signals from the device of figure 1.

### Detailed Description of Embodiments

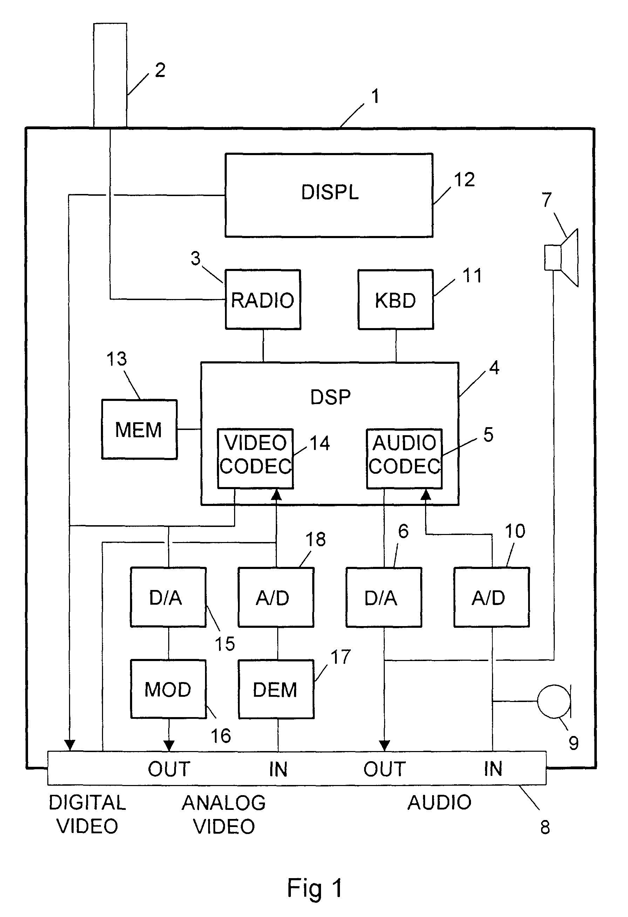

Figure 1 shows an example of how the invention can be implemented in a mobile telephone 1, which can be e.g. a UMTS phone or a GSM phone having a high data rate due to e.g. EDGE (Enhanced Datarates for GSM Evolution). It could also be a DAMPS phone, or it could be a short range radio link device, such as a Bluetooth device.

Many of the components shown in figure 1 are well known standard components of a mobile telephone. A radio connection to a base station (not shown) is established through an antenna 2 connected to the radio transmitter/receiver circuit 3. The radio circuit 3 is connected to a digital signal processor (DSP) 4, which may include, or may be integrated with, a micro controller controlling all the functions of the mobile telephone 1. The DSP also includes an audio coder/decoder circuit 5.

When the telephone 1 is used for a normal telephone conversation with a remote party, the radio signals received by the radio circuit 3 are processed by the DSP 4, and audio signals are decoded by the audio codec 5 and converted into analog audio signals in the digital-to-analog converter 6. These audio signals are then sent to the loudspeaker 7 so that the user of the telephone can listen to the voice of the other party. Alternatively, the audio signals are sent through an interface connector 8 to an external loudspeaker (not shown) in e.g. a headset connected to the telephone.

The other way round, the voice of the user is picked up by the microphone 9, and the analog audio signals therefrom are converted into digital signals in the analog-to-digital converter 10. These digital audio signals are then coded according to the protocol used by the phone in the audio codec circuit 5 and transmitted through the radio circuit 3 and the antenna 2 to the base station and eventually to the remote party. Instead of the built-in microphone 9 an external microphone in e.g. a headset connected to the interface connector 8 can be used.

In another embodiment the digital-to-analog and analog-to-digital converters may be integrated together with the DSP.

A keyboard 11, which can be used for entering telephone numbers, messages, etc, is also connected to the processor 4. This is also the case for a display 12 provided for the presentation of information to the user of the telephone. This information could be numbers or messages entered by means of the keyboard 11, or it could be information received by the telephone through the antenna 2. A memory 13 is provided for the storage of data, including messages picked up by the microphone 9 or received through the antenna 2. Stored messages can be replayed through the loudspeaker 7 or transmitted to a remote party through the antenna 2. The stored messages could also be audio files in the form of e.g. music, or they could be video clips.

As will be seen in figure 1, the DSP 4 also includes a video coder/decoder circuit 14. The video circuit could also be located in a separate DSP. If the radio signals received by the radio circuit 3 comprise digital coded video signals, they will be decoded in the video codec 14 similar to the decoding of audio signals in the audio codec 5. The decoded video signals may be sent as digital video signals (according to one of the many existing protocols for digital video signals) to a digital video out terminal on the interface connector 8, from where they may be connected to a digital video display unit which, however, must be prepared for digital video signals according to the same protocol. The digital video signals may also be used as input signals to the display 12.

According to the invention the decoded video signals from the video codec 14 are connected to a digital-to-analog converter 15 in which they are converted into analog video signals. These analog video signals are then modulated in the modulator 16 to form a standard video signal, such as a PAL, SECAM or NTSC signal, all of which are well-known television standards. Each of these standards covers large areas of the world, and within a certain area all television receivers are arranged to accept one of the standards. As an example any colour television receiver in the United States of America can receive an NTSC signal. Therefore, the provision of a standard analog video signal on the interface connector of a mobile telephone means that any normal television receiver can be used as a display unit for the video signals received by the phone. In the situation described above the video signals, which were converted into analog video signals and provided on the analog video out terminal, were received through the antenna 2 and the radio circuit 3. However, also digital video signals stored in the memory 13 may be converted and provided on the analog video out terminal.

Similarly, analog video signals in a standard television format may be received on an analog video in terminal on the interface connector 8 from a normal video camera or recorder. These analog input signals are demodulated in the demodulator 17 and converted into digital video signals in the analog-to-digital converter 18. The digital video signals can then be coded in the video codec 14 and transmitted through the radio circuit 3 and the antenna 2 to a remote location, or they can be stored in the memory 13.

Above, the mobile telephone is described as being prepared for digital video input signals as well as digital video output signals on the interface connector, but it should be noted that it could also be arranged to have only digital video input signals or only digital video output signals.

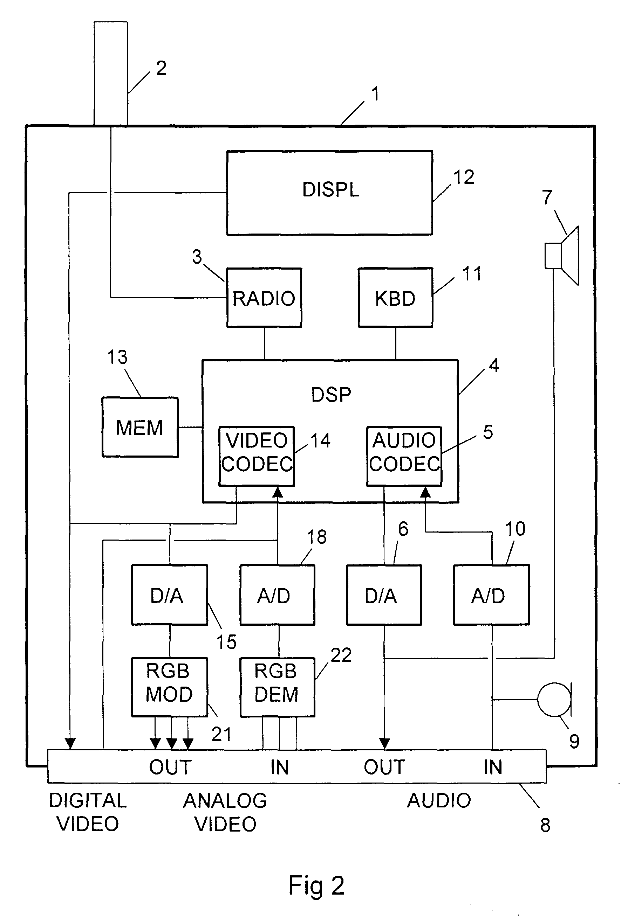

As an alternative to the standard television signals (e.g. PAL, SECAM or NTSC) described above a different embodiment is shown in figure 2. Here an RGB modulator 21 is used instead of the modulator 16 in figure 1. The RGB modulator 21 provides three separate signals for the colours red, green and blue, respectively, and this type of signal is accepted as an input signal by most computer monitors, and virtually any computer monitor can be used as a display unit for the mobile telephone. Similarly, RGB input signals can be accepted by the RGB demodulator 22, thus allowing any camera having an RGB output to be used as an input device for the phone.

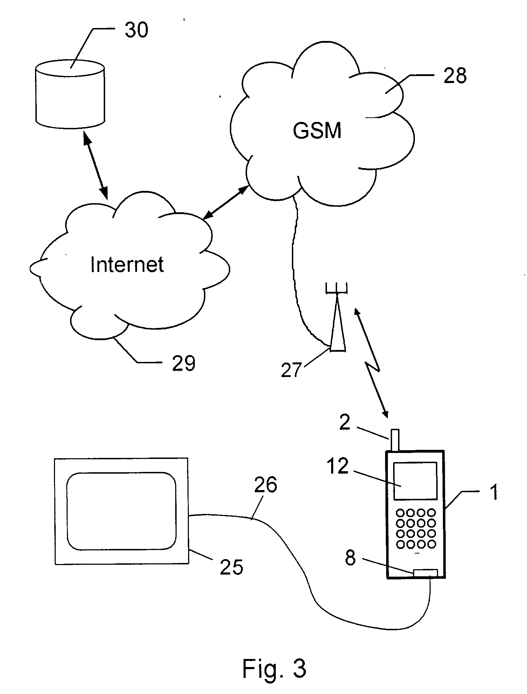

Figure 3 shows an example of how an analog video output signal according to the invention can be used. The mobile telephone 1 is connected to a television receiver 25 through a cable 26 and the analog video out terminal of the interface connector 8. Through the antenna 2 the telephone 1 is in radio contact with a base station 27, and the telephone may thus be connected via a GSM network 28 (prepared for EDGE) to the Internet 29 and a server 30 connected thereto. A video sequence stored in the server 30 may now be transmitted to the telephone 1 in which it is treated as described in relation to figure 1, and analog video signals in e.g. PAL, SECAM or NTSC format are sent from the analog video out terminal of the interface connector 8 to the television receiver 25. Thus the video sequence from the server 30 is received by the phone 1 and shown directly on the normal standard television receiver 25. The television receiver 25 can of course be replaced by a standard video recorder so that the video sequence can be recorded for later presentation. If the analog video output of the phone is an RGB output as shown in figure 2, a standard computer monitor could be used instead of the television receiver 25.

Instead of the video sequence stored in the server 30, the telephone 1 could also be connected through the GSM network 28 to another mobile telephone connected to a video camera so that video signals from this camera are transmitted directly to the phone 1 and shown on the television receiver 25.

As mentioned earlier, the analog video output signal may also be generated from data stored in the memory 13 of the mobile telephone 1 instead of data received through the antenna 2. Thus, as an example, a video sequence can be downloaded to the memory 13 of the phone and then viewed on the television receiver connected to the phone at a later time.

During normal use of the mobile phone 1 the display 12 is often used, e.g. for displaying messages, WAP (Wireless Applications Protocol) browsing, e-mail reading or the use of PIM (Personal Information Management). With the analog video output signal according to the invention these uses can be enhanced, because the information showed on the display 12 of the phone can now also be presented on a standard television receiver for better viewing.

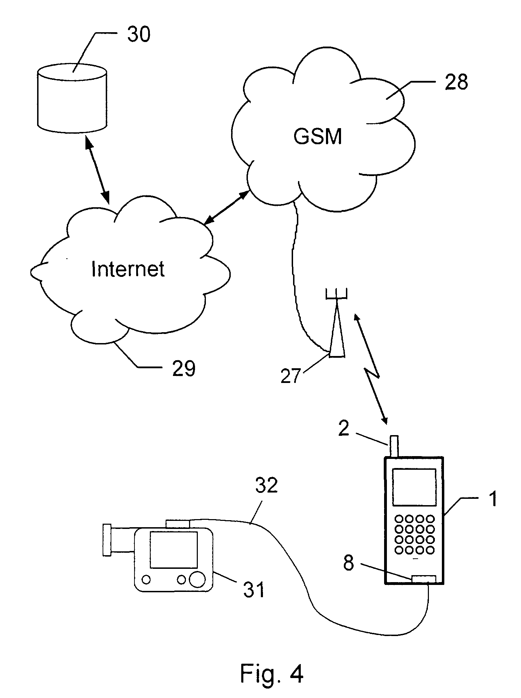

Figure 4 shows an example of the use of an analog video input signal according to the invention. A standard video camera 31 having a normal analog video output terminal is connected through a cable 32 to the analog video in terminal of the interface connector 8. In the mobile telephone 1 the analog video signals (in e.g. PAL, SECAM or NTSC format) received from the camera 31 are converted into digital video signals and transmitted through the antenna as described earlier. In the example shown the signals are transmitted via the base station 27, a GSM network 28 and the Internet 29 to a server 30 connected to the Internet 29, but the destination could also be e.g. another mobile phone connected to the GSM network 28. Instead of transmitting the signals from the mobile telephone 1, they could also be stored in the memory 13 for later transmission or presentation on a television receiver connected to the analog video out terminal as described above. The camera 31 can of course be replaced by any other device generating a standardized video signal, such as a video recorder replaying a recorded video sequence. Again the analog video signals could also be in an RGB format.

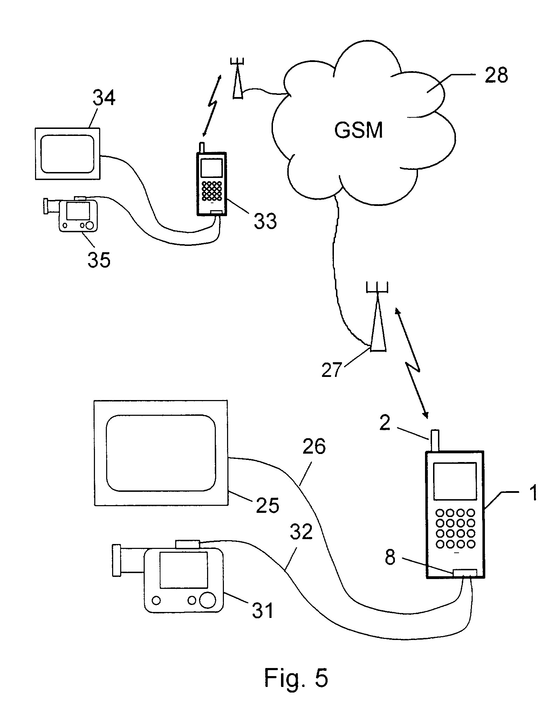

Finally, figure 5 shows an example in which the analog video input signal and the analog video output signal of the mobile telephone 1 are both used at the same time. A standard television receiver 25 and a standard video camera 31 are both connected to the interface connector 8 via cables 26 and 32. Through the GSM network 28 the phone 1 is connected to another mobile telephone 33, which is also connected to a television receiver 34 and a camera 35. In this way it is possible to perform a video-conference between the two locations using standard video cameras and standard television receivers together with the two mobile telephones.

Although a preferred embodiment of the present invention has been described and shown, the invention is not restricted to it, but may also be embodied in other ways within the scope of the subject-matter defined in the following claims.

## Claims

1. A digital portable communications device (1) for communication via a communications network (28), said device further having circuitry for exchanging video signals between the device and an external video apparatus (25; 31),
**characterized in that** said circuitry (15, 16, 17, 18; 21, 22) for exchanging video signals is arranged to exchange the video signals in the form of analog video signals.

2. A communications device according to claim 1, **characterized in that** said circuitry for exchanging video signals comprises digital-to-analog conversion means (15) arranged to provide an analog video output signal for transmission to said external video apparatus (25).

3. A communications device according to claim 1 or 2, **characterized in that** said circuitry for exchanging video signals comprises means (17; 22) for receiving an analog video input signal from said external video apparatus (31), and analog-to-digital conversion means (18) for converting the received analog video input signal into a digital video signal.

4. A communications device according to any one of claims 1 to 3, **characterized in that** the device further comprises memory (13) for the storage of digital video signals.

5. A communications device according to any one of claims 1 to 4, **characterized in that** said circuitry for exchanging video signals is arranged to exchange the analog video signals in a standard television signal format, such as NTSC or PAL.

6. A communications device according to any one of claims 1 to 4, **characterized in that** said circuitry for exchanging video signals is arranged to exchange the analog video signals in an RGB format.

7. A communications device according to any one of claims 1 to 6, **characterized in that** said circuitry for exchanging video signals is arranged to exchange the analog video signals via an interface connector (8) on the device.

8. A communications device according to any one of claims 1 to 7, **characterized in that** the device is a mobile telephone (1).

9. A communications device according to any one of claims 1 to 7, **characterized in that** the device is a device having a Bluetooth interface.

10. A method of exchanging video signals between an external video apparatus (25; 31) and a digital portable communications device (1) for communication via a communications network (28),
**characterized in that**
said video signals are exchanged in the form of analog video signals.

11. A method according to claim 10, **characterized in that** digital video signals are converted into analog video signals in the digital portable communications device and then transmitted as analog video output signals from the portable communications device (1) to the external video apparatus (25).

12. A method according to claim 11, **characterized in that** the digital video signals to be converted are read from a memory in the portable communications device (1).

13. A method according to claim 12, **characterized in that** the digital video signals read from a memory are also presented on a display (12) on the portable communications device (1).

14. A method according to claim 11, **characterized in that** the digital video signals to be converted are received by the portable communications device (1) via said communications network (28).

15. A method according to any one of claims 10 to 14, **characterized in that** said analog video signals are transmitted from the external video apparatus (31) to the portable communications device (1) in which the analog video signals are converted into digital video signals.

16. A method according to claim 15, **characterized in that** said digital video signals are stored in a memory (13) in the portable communications device (1).

17. A method according to claim 15, **characterized in that** said digital video signals are transmitted by the portable communications device (1) to said communications network (28).

18. A method according to any one of claims 10 to 17, **characterized in that** said analog video signals are exchanged in a standard television signal format, such as NTSC or PAL.

19. A method according to any one of claims 10 to 17, **characterized in that** said analog video signals are exchanged in an RGB format.

20. A method according to any one of claims 10 to 19, **characterized in that** said analog video signals are exchanged via an interface connector (8) on the digital portable communications device.

21. A method according to any one of claims 10 to 20, **characterized in that** the digital portable communications device is a mobile telephone (1).
